# NEW EUROPEAN PATENT SPECIFICATION

(11) **EP 1 643 244 B2**
(45) Date of publication and mention of the opposition decision: **09.09.2015**
(45) Mention of the grant of the patent: 07.09.2011
(21) Application number: 05255459.9
(22) Date of filing: 07.09.2005
(51) Int. Cl.: G01N 30/60, B01D 15/22

(54) **HOIST-FREE CHROMATOGRAPHY METHOD**
VERFAHREN FÜR CHROMATOGRAPHIE OHNE HEBEZEUG
PROCÉDÉ DE CHROMATOGRAPHIE SANS APPAREIL DE LEVAGE

(30) Priority: 07.09.2004 US 607557 P
(43) Date of publication of application: 05.04.2006
(73) Proprietor: Asahi Kasei Bioprocess, Inc., Glenview, IL 60025 (US)
(72) Inventor: Bellafiore, Louis, Wilmette Illinois 60091 (US)
(74) Representative: Dauncey, Mark Peter

(56) References cited:
- EP-A- 1 566 631
- EP-A1- 0 008 921
- WO-A-97/32207
- WO-A-2005/056156
- US-A- 3 704 904
- US-A- 3 966 609
- US-A- 4 569 378
- US-A- 4 597 866
- US-A- 4 769 141
- US-A- 5 021 162
- US-A- 5 092 743
- US-A- 5 167 809
- US-A- 5 666 710
- US-A- 5 893 971
- US-A1- 2003 167 936
- US-A1- 2004 129 255
- US-B1- 6 186 904
- US-B1- 6 736 974
- US-B2- 6 712 712
- DINGENEN J.: 'Columns and packing methods' ANALUSIS MAGAZINE vol. 26, no. 7, 1998, pages M18 - M33
- '"Hydraulic Handbook"', vol. 5 ED., 1971, TRADE & TECHNICAL PRESS LTD., SURREY pages 14 - 34

## Description

### BACKGROUND OF THE INVENTION

The present invention relates generally to processing columns such as dynamic axial compression chromatography columns and, in particular, to a specially designed column innovation that eliminates the need for overhead hoists during maintenance and operation procedures and a method for retrofitting industrial chromatography columns with the innovation to improve column handling and operation.

Liquid chromatography (LC) columns are used in many industrial processes at various pressure ratings from low pressure (LPLC) to medium pressure (MPL.C) and high pressure (HPLC). The use of large scale chromatography to purify raw materials, intermediates and end products is common in many industrial segments including pharmaceutical products. biopharmaceutital products, nutraceutical products, food and beverage products, household products, personal care products, petroleum products, chemical products and other specialty products. In addition, certain industries such as the Biopharmaceutical Industry require the use of multiple chromatographic purification steps for every product made.

The state of the art in large-scale column chromatography utilizes a technology referred to as "dynamic axial compression" in which an adjustable position piston head is used. This approach requires an outer column tube within which an internally located piston head is dynamically compressed by means of pneumatic or hydraulic pressure that permits both the formation and maintenance of homogenously packed beds of particulate chromatography matrices (e.g. polymeric or silica gel based chromatography medias). The force on the piston may be either externally applied to the piston via a rod or internally applied (i.e. within the column) to the piston itself with the rod providing guidance for the piston movement.

These columns also need to include mesh frits at the interface with the media, which then retains the chromatography media in place during column bed formation and subsequent processing operation. The frits are friction fitted within the column, or may be welded or bolted into place, and a typical column has two frits with one of the frits positioned on the inlet side of the media and the other frit positioned on the outlet side of the media.

After use, the columns are emptied and the frits, seals that may be present to hold the frits in position and piston head seals that prevent liquid transfer around the edges of the piston head need to be easily inspected, cleaned and removed for external cleaning procedures or replacement. Normally this is accomplished through the use of industrial multi-ton capable overhead hoists that remove the piston head by lifting it out from the top of the column tube. The removed piston head has to be carefully stabilized and protected from scratches, dents, deformations or other catastrophic damage while it is out of the column during maintenance or operation procedures. In addition to the operational difficulties there is the risk of operator injury during handling of the heavy piston components.

WO 2005/058156 discloses a method of operating chromatography column apparatus comprising a column tube and first and second discrete end cell structures, associated with the respective ends of the column tube and positionable to close off the column tube and define therein a column space for retaining chromatography medium in use of the apparatus. The first end cell portion comprises a piston portion fitting slidably in the column tube. The column tube and the second end cell structure are separated to provide an access spacing between them. The piston portion of the first end cell structure is advanced through the column tube to expose it at the open second end of the column tube, for maintenance of the piston portion thus exposed. Corresponding chromatography apparatus is another aspect of the disclosure.

US-B1-6,736,974 discloses a chromatography column having a valve and a method for filling it with a slurry of media, the valve utilizing a piston to compact the slurry in the column. The piston moves through a cavity in communication with both a slurry inlet and slurry ports which are in communication with the interior of the chromatography column. The piston assists in compacting the slurry within the column. The method of filling the column does not require disassembly of the column. The piston may also be utilized to change the valve position from a slurry fill position to a normal operation position or other position.

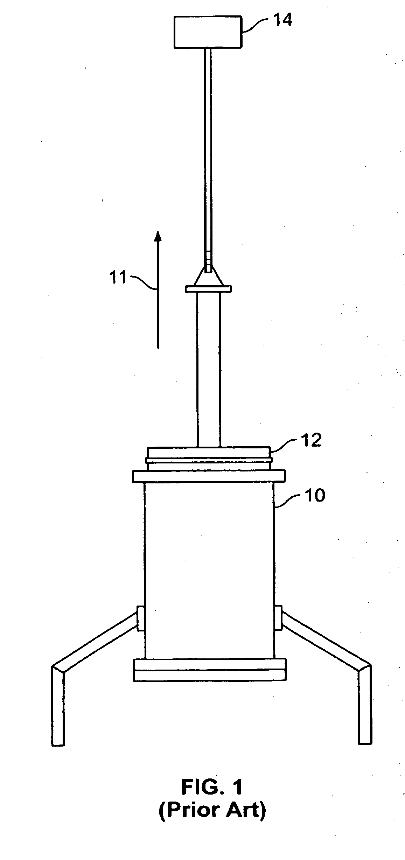

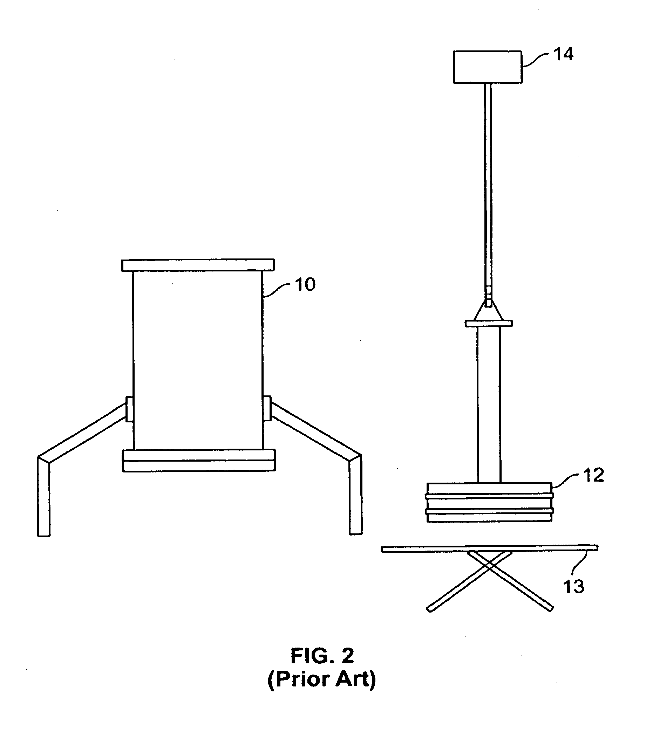

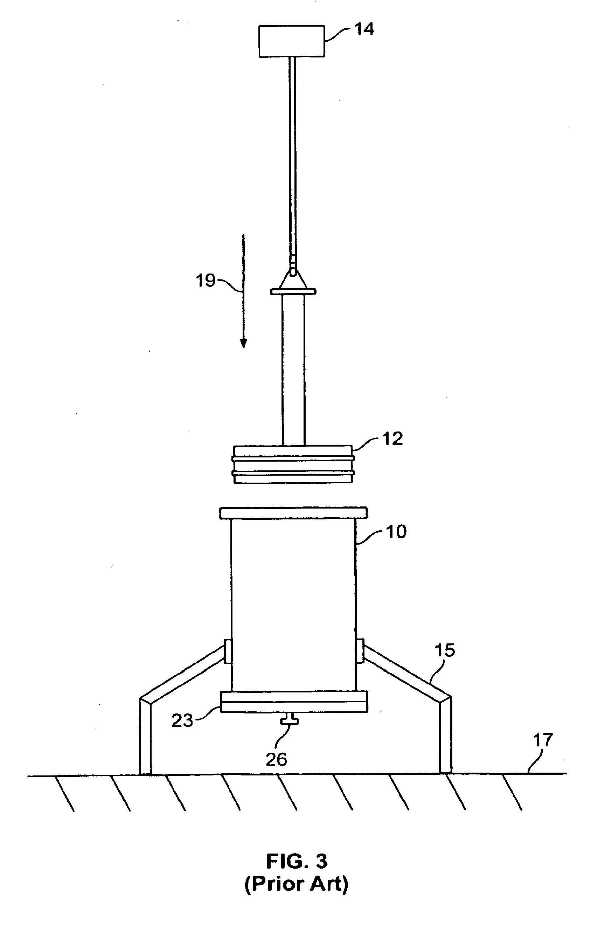

Fig. 1 illustrates a prior art approach to removing a piston head from a large-scale dynamic axial compression chromatography column 10. The system of Fig. 1 requires an externally powered and operated winch or hoist trolley system 14 of significant size and capacity to remove the internal piston head 12 and column end plate through which the column piston rod extends, as illustrated by arrow 11. In addition, the location of the hoist 14 must be such that the piston head can be removed in exact alignment because any skewing of the piston head during removal can cause the head to become seized in place and both the tube and piston head damaged. As illustrated in Fig. 2, the removed piston head is lowered onto a platform 13 or the like and must be very carefully handled, transported and protected during maintenance. There is also the need to secure the base of the column securely to make sure the entire column assembly is not picked up off the floor during hoisting. To this end, column legs t 5 must be bolted or otherwise secured to floor 17, as illustrated in Fig. 3.

As Fig. 3 demonstrates, the final major challenge accurs during replacement of the removed piston unit 12 back into the chromatography column 10, as indicated by arrow 19. If any slight mishandling occurs, critical seals can be compromised which will cause column malfunction during operation. In addition, if any skewing occuts during repositioning, the head can become lodged in place or easily damaged resulting in shut down of critical manufacturing processes at an extremely high cost.

In the past, large-scale chromatographic purification work was conducted in industrial manufacturing-environments with easy access to ancillary Equipment such as overhead trolley hoist systems. The recent expansion of the Biotech Industry, which is heavily reliant on LC processes, as well as the need to perform this purification work in controlled areas such as certified clean rooms or purification suites, has created an operational problem where access to overhead hoists is no longer available. In addition, "lean" manufacturing approaches throughout the industries mentioned above has led to the establishment of multiple-use smaller scale manufacturing areas that do not have the same capabilites as traditional large single space areas. Large chromatography columns (typically up to 2 meters internal diameter) can weigh multiple tons and are no longer portable. The difficulties and costs associated with using hoists in controlled areas to perform operations and maintenance has become unacceptable for many facilitaies. Thus, a chromatograhy column that docs not require external hoists is of great necessity and value.

In addition, ease of use is critical for large operations where multiple process operators need to be trained in the safe and reproducible use of processing equipment. An uncomplicated and robust solution to large chromatographic column operation is required.

Accordingly, it is an object of the present invention to provide a hoist-free method is that are capable of providing easy access to key piston head components and frits of a chromatography column, or other type of processing column, for maintenance and operational procedures. This provides a significant advantage even in areas where hoists are available, as discussed above

It is another object of the present invention to provide hoist-free capability that may be applied to exisling industrial chromatography columns, or other processing columns, of various designs or manufacturers as an upgrade:

### SUMMARY OF THE INVENTION

The present invention is directed to the use of a chromatography column., or other type of processing column, including a column tube having a top end cap having an opening there through and an open bottom end. A bottom end cap covers and is removably attached to the open bottom end of the column tube and a piston is slidably positioned within the column tube. A rod is attached to the piston and passes through the top end cap opening. The length of the rod is extended so that the piston may be lowered partially through the open bottom end of the column tube when the bottom end cap is removed. The rod features a threaded bore and the removable extension piece features a threaded stud that engages the threaded bore of the rod.

The column features an arrangement for raising the piston including a hydraulic pump that communicates with a portion of an interior of the column tube above the piston via a port formed in the top end cap. Alternatively, a jack may be used for raising the piston. As another alternative, a vacuum pump that communicates with the portion of the interior of the column tube above the piston may be used to raise the piston. As another alternative, a port formed in the bottom end plate may be engaged by a pump that pumps liquid into the column tube below the Piston

The following detailed description of embodiments of the invention, taken in conjunction with the appended claims and accompanying drawings, provide a more complete understanding of the nature and scope of the invention.

### BRIEF DESCRIPTION OF THE DRAWINGS

Fig. 1 is a side elevational view of a prior art chromatography column and an overhead winch or hoist being used to remove 11 compression piston from the chromatography column in accordance with the prior art;
Fig. 2 is a side devotional view showing the removed piston of Fig. 1 being lowered onto a platform using the overhead winch or hoist in accordance with the prior art;
Fig. 3 is a side elevational view showing the piston of Figs. 1 and 2 being inserted back into the column using the overhead winch or hoist in accordance with the prior art;
Fig. 4 is a cross sectional view of a chromatography column used in accordance with the present invention with the piston lowered partially through the open bottom of the column in accordance with an embodiment of the method of the present invention;
Fig. 5 is an enlarged cross se tional view of the piston rod and piston rod extension of Fig. 4;
Fig. 6 is cross sectional view of the column of Fig. 4 showing the piston being raised within the column;
Fig. 7 is a schematic view of the hydraulic system of an embodiment of the chromatography column used in the present invention;
Fig. 8 is a side elevational view of the column of Fig. 4 and a jack being used to raise the piston in accordance with an embodiment of the method of the present invention.

### DESCRIPTION OF THE PREFERRED EMBODIMENTS

The present invention permits hoist-free operation either as a retrofit to existing chromatography columns, or other types of processing columns, or inclusion in newly constructed columns or as a method to apply to either. While the invention is described below in terms of a chromatography column, it is to be understood that it may also be applied to other types of processing columns such as a solid phase reaction or synthesis column, a filtration column or a capture step column.

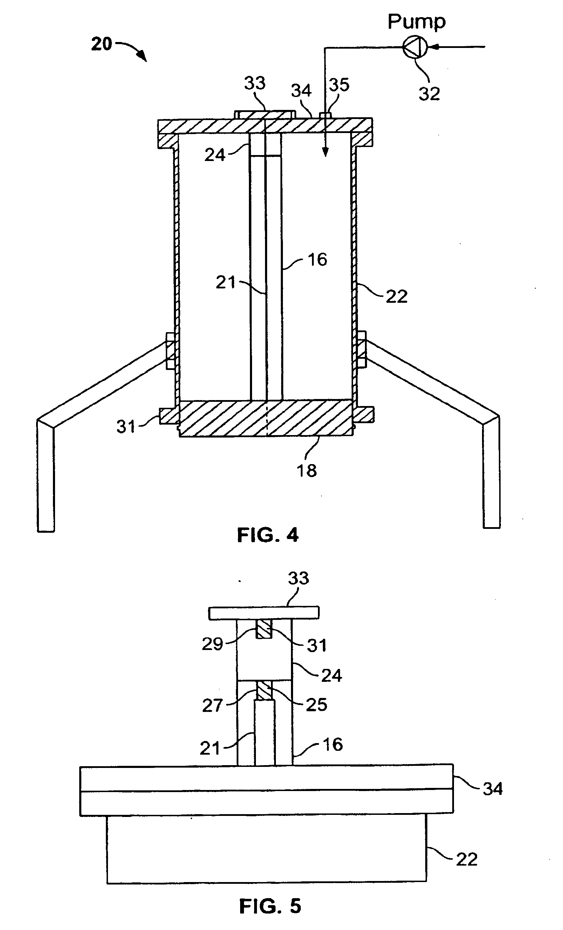

An embodiment of the column used in the present invention is indicated in general at 20 in Fig. 4. As is known in the art, the inlet of the column consists of a passage 21 (see also Fig.5) formed axially through a piston rod 16. While not illustrated in Fig. 4, the column 20 also features a lower column tube or bottom end plate, such as the one illustrated at 23 in Fig. 3, that features an outlet port 26 that serves a the outlet of the column. Port 26 may alternatively be used as an inlet port and passage 21 used as the outlet of the column. As is known in the art, the bottom plate of the column is attached to flange 31 of Fig. 4 by bolts or an alternative removable fastening arrangement.

The column 20 both permits egress of the piston head 18 from the lower end of the column tube 22 and return of the piston into the column tube. It also provides controlled and safe access to the piston head for routine or emergency frit and seal maintenance and replacement operations.

As illustrated in Figs. 4 and 5, the first stage of hoist-free operation in accordance with the method of the invention is accomplished, after the bottom end plate of the column is removed, by extending the length of piston rod 16 with extension 24 to permit the lowering of the internal piston head 18 down through the column tube 22 until the key maintenance areas are exposed and accessible from the open bottom of the column. This is done without allowing the piston head to fully exit the column tube. Due to the piston head exposure permitted by the piston rod extension, external overhead hoists are no longer required.

An extension 24 of an existing piston rod permits the movement of the piston head 18 outside the lower end 20 of the column tube 22, as illustrated in Fig. 4.

The use of a removable extension piece 24, allows the extension piece to be installed just prior to maintenance procedures and removed afterwards. Therefore the piston rod length used during operations would be the shorter one preventing accidental contact with the lower column tube endplate.

As illustrated in Fig. 5, the extension piece 24 preferably is attached to the existing rod 16 by a threaded stud 25 that is attached o the center of the bottom end, of the extension piece and that is received within a threaded bon 27 formed in the top end of the inlet passage 21 of rod 16; which is concentric with the longitudinal axis of rod 16. The top end of the extension piece 24 also features a central threaded bore 9 that receives a threaded stud 31 that is attached to the bottom surface of end stop 33. Other arrangements known in the art for attaching the ends of adjacent rods or columns together may be used as alternative to the threaded stud and bore arrangement illustrated in Fig. 5.

The diameter of extension 24 preferably is slightly less than the diameter of rod 16 so as to avoid a raised circumferential edge that would otherwise pass over, and thus potentially damage, the seal around the opening through the upper column end plate 34 through which the rod 16 and extension piece 24 slide.

In Fig. 4, the piston 18 has been moved down in the tube 22 using either pneumatic or hydraulic pressure provided via pump 32 and a port 35 formed in the upper column end plate 34. In the preferred embodiment, hydraulic pressure is used to provide smooth and controlled movement, whereas pneumatic pressure can allow the piston to move jerkily or suddenly due to the compressibility of typical gases used (e.g. air, nitrogen, argon, etc.)

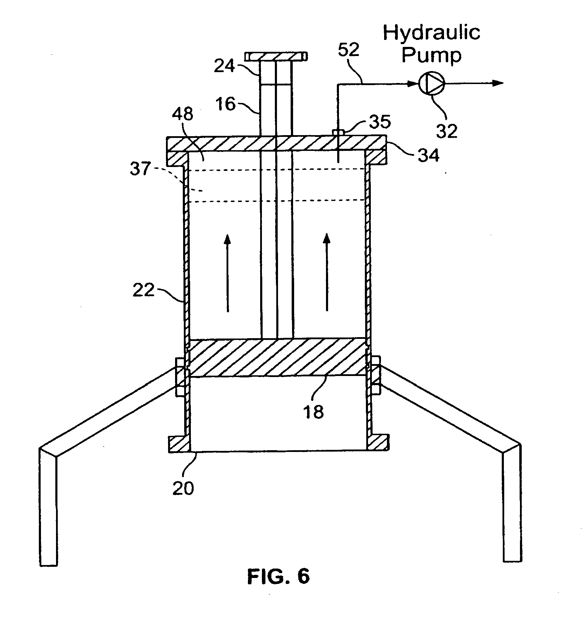

In the second stage of hoist-free operation in accordance with the method of the invention, the piston head is returned back up into the column tube into its initial use position, indicated in phantom at 37 in Fig. 6.

Fig. 6 shows the preferred use of hydraulics, including pump 32, to lift the piston head 18 back into the column tube 22 via suction. This is a clean, safe and self-contained approach that eliminates the need for large handling equipment in the clean room or other process areas. This approach also provides the most control over the piston head movement so that it may be moved with a high level of precision.

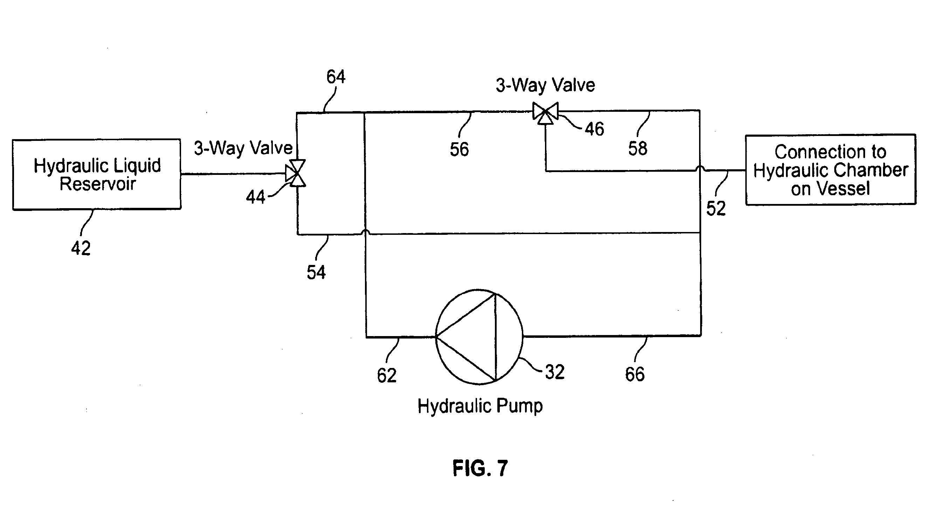

Fig. 7 is a schematic of the hydraulic system that permits hoist-free lowering and raising of the piston. In addition to hydraulic pump 32 (also illustrated in Figs. 4 and 6), the system includes a reservoir 42 which holds and receives hydraulic fluid as well as 3-way valves 44 and 46. The system communicates with the portion 48 (Fig. 6) of the interior of column tube 22 above piston 18 via line 52 and port 35 formed in the upper column end plate 34.

When it is desired to move the piston 18 down into the position illustrated in Fig. 4, valve 44 is configured to supply hydraulic fluid from reservoir 42 to branches 54 and 66 of Fig. 7 and valve 46 is configured to direct the fluid from branches 62 and 56 to branch 52 when pump 32 is activated. When it is desired to draw piston 18 up into column tube 22 into the position indicated in phantom at 37 in Fig. 6, the valve 46 of Fig. 7 is reconfigured to direct hydraulic fluid from line 52 (and from the upper portion of the interior of column tube 22 above piston 18) to branches 58 and 66 and valve 44 is reconfigured to direct hydraulic fluid from branches 62 and 64 to reservoir 42 when pump 32 is activated.

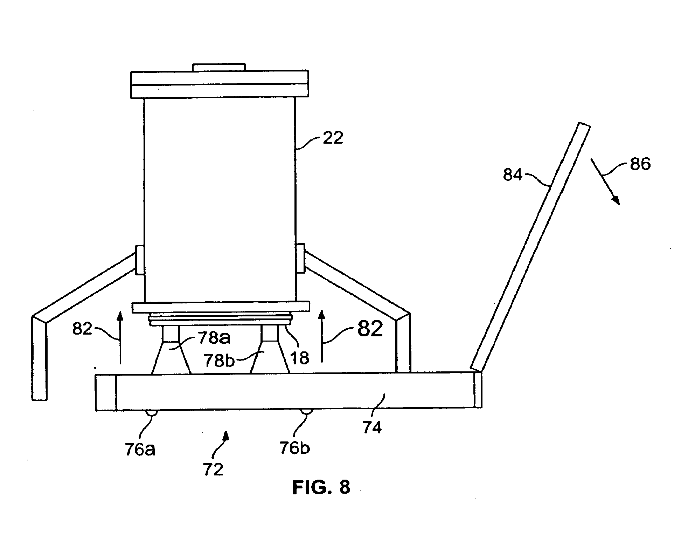

Alternatively, as illustrated in Fig. 8, a mechanical approach to restore the piston head into the column can be used by means of a jacking device, indicated in general at 72, to physically push the exposed piston head back into the tube and permit replacement of the column tube end plate. Such jacking devices are available in the prior art. Jack 72 features a base 74 which is mounted upon wheels 76a and 76b. A pair of hydraulic or mechanically-activated lifts 78a and 78b are positioned on top of base 74 and raise piston 18 in the direction of arrows 82 when handle 84 is moved in the direction of arrow 86.

Another option for raising piston 18 involves mechanical inserti on of the piston head into the tube, followed by replacement of the end plate, illustrated at 23 in Fig. 3. This is followed by the pumping of liquid into the end plate outlet or port, indicated at 26 in Fig. 3, which moves the piston back up inside the tube to its starting position, indicated in phantom at 37 in Fig. 6. A system similar to the one illustrated in fig. 7 may be used where line 52 would be connected to port 26.

Still another option to pull the piston head back into the column tube includes the application of a vacuum to the upper portion of the interior of column tube 22 above piston 18 (48 in Fig. 6), whereby the extended piston head is drawn back up into position. Such an approach could use the arrangement of Fig. 6 where a vacuum pump is substituted for hydraulic pump 32.

The advantage of the hydraulic approach over the mechanical is the elimination of possible damage to the head from the jacks or jacking procedure. The advantage of the hydraulic approach over the vacuum approach is that hydraulics permit very smooth and controlled piston head movement while the vacuum approach may cause sudden and rapid piston head movement.

While the preferred embodiments of the invention have been shown and described, it will be apparent to those skilled in the art that changes and modifications may be made therein without departing from the scope which is defined by the appended claims.

## Claims

1. A method for accessing the piston of a processing column (20) having a column tube (22) with an open bottom end and a top end cap (34) having an opening therethrough, a bottom end cap (23) covering and removably attached to the open bottom end of the column tube, a piston comprising a piston head (18) slidably positioned within the column tube and a piston rod (16) attached to the piston head and passing through the opening in the top end cap of the column tube, the method comprising the steps of:
a. removing the bottom end cap of the column tube without raising the column tube;
b. extending the length of the piston rod with a means (24) removably attached to the piston rod, wherein the means (24) for extending a length of the piston rod (16) includes a removable extension piece (24) that is secured to the piston rod;
c. lowering the piston head (18) so that it is lowered partially through the open bottom of the column tube;
d. raising the piston; and
e. attaching the bottom end cap to the column.

## Patentansprüche

1. Verfahren für einen Zugriff zum Kolben einer Verarbeitungssäule (20) mit einem Säulenrohr (22) mit einem offenen unteren Ende und einer oberen Endkappe (34) mit einer Öffnung dort hindurch, wobei eine untere Endkappe (23) das offene untere Ende des Säulenrohres bedeckt und entfernbar daran befestigt ist, wobei ein Kolben einen Kolbenboden (18), der verschiebbar innerhalb des Säulenrohres positioniert ist, und eine am Kolbenboden befestigte Kolbenstange (16) aufweist und durch die Öffnung in der oberen Endkappe des Säulenrohres hindurchgeht, wobei das Verfahren die folgenden Schritte aufweist:
a. Entfernen der unteren Endkappe des Säulenrohres, ohne dass das Säulenrohr angehoben wird;
b. Ausziehen der Länge der Kolbenstange mit einer Einrichtung (24), die entfernbar an der Kolbenstange befestigt ist, wobei die Einrichtung (24) für das Ausziehen einer Länge der Kolbenstange (16) ein entfernbares Verlängerungsstück (24) umfasst, das an der Kolbenstange gesichert ist;
c. Absenken des Kolbenbodens (18), so dass er teilweise durch den offenen Boden des Säulenrohres abgesenkt wird;
d. Anheben des Kolbens; und
e. Befestigen der unteren Endkappe an der Säule.

## Revendications

1. Procédé d'établissement d'un accès au piston d'une colonne de traitement (20), comportant un tube de colonne (22) avec une extrémité inférieure ouverte et un capuchon d'extrémité supérieur (34) comportant une ouverture le traversant, un capuchon d'extrémité inférieur (23) recouvrant l'extrémité inférieure ouverte du tube de la colonne et fixé de manière amovible à celle-ci, un piston comprenant une tête de piston (18) positionné de manière coulissante dans le tube de la colonne, et une tige de piston (16) fixée sur la tête de piston et passant à travers l'ouverture dans le capuchon d'extrémité supérieur du tube de la colonne, le procédé comprenant les étapes ci-dessous :
a. retrait du capuchon d'extrémité inférieur du tube de la colonne sans soulever le tube de la colonne ;
b. extension de la longueur de la tige de piston par l'intermédiaire d'un moyen (24) fixé de manière amovible sur la tige de piston, le moyen (24) destiné à étendre une longueur de la tige de piston (16) englobant une pièce d'extension amovible (24) fixée sur la tige de piston ;
c. abaissement de la tête de piston (18), de sorte qu'elle est abaissée partiellement à travers le fond ouvert du tube de la colonne ;
d. soulèvement du piston ; et
e. fixation du capuchon d'extrémité inférieur sur la colonne.
